# EUROPEAN PATENT APPLICATION

(11) **EP 4 704 184 A1**
(43) Date of publication of application: **04.03.2026**
(21) Application number: 25198377.1
(22) Date of filing: 27.08.2025
(51) Int. Cl.: H01M 4/52, H01M 10/0525, H01M 10/44, H01M 4/02, C01G 53/506

(54) **METHOD FOR CHARGING RECHARGEABLE LITHIUM BATTERY**

(30) Priority: 02.09.2024 KR 20240118661
(71) Applicant: SAMSUNG SDI CO., LTD., Yongin-si, Gyeonggi-do 17084 (KR); POSTECH Research and Business Development Foundation, Pohang-si, Gyeongsangbuk-do 37673 (KR)
(72) Inventor: KANG, Seok Mun, 17084 Yongin-si, Gyeonggi-do (KR); YOON, Jaesang, 17084 Yongin-si, Gyeonggi-do (KR); KONG, Youngsun, 17084 Yongin-si, Gyeonggi-do (KR); KIM, Young-Ki, 17084 Yongin-si, Gyeonggi-do (KR); KIM, Yong-Tae, 37673 Pohang-si, Gyeongsangbuk-do (KR); KWON, Jaesub, 37673 Pohang-si, Gyeongsangbuk-do (KR); PARK, Kyu-Young, 33673 Pohang-si, Gyeongsangbuk-do (KR)
(74) Representative: Meissner Bolte Partnerschaft mbB

(57) **Abstract**

The present disclosure relates to a method for charging a rechargeable lithium battery including constant-current charging the rechargeable lithium battery at a current density of 4C to 10C; and constant-voltage charging the rechargeable lithium battery, wherein the rechargeable lithium battery includes a positive electrode active material including a lithium nickel-based composite oxide having a nickel content of greater than or equal to about 80 mol% based on 100 mol% of metals excluding lithium.

## Description

### BACKGROUND

### 1. Field

The present invention relates to a method for charging a rechargeable lithium battery.

### 2. Description of the Related Art

Recently, with the rapid spread of electronic devices that use batteries, such as mobile phones, laptop computers, and electric vehicles, the demand for rechargeable batteries having high energy density and high capacity is rapidly increasing. Accordingly, research and development to improve the performance of rechargeable lithium batteries is actively underway.

Rechargeable lithium batteries include a positive electrode and a negative electrode including an active material capable of intercalating and deintercalating lithium ions, and an electrolyte solution, and generate electrical energy through oxidation and reduction reactions if (e.g., when) lithium ions are intercalated and deintercalated from the positive electrode and the negative electrode.

Because the rechargeable lithium batteries, which are recharged after the discharge and continuously (e.g., substantially continuously) used, exhibit performance differences depending on their charge/discharge state, efforts to improve the performance of the rechargeable lithium batteries by improving a charge method are being made.

### SUMMARY

The present invention provides a method for charging a rechargeable lithium battery, which can shorten a charging time and improve cycle-life characteristics of the battery by avoiding or reducing a structure degradation reaction of a positive electrode active material.

The present invention provides a method for charging a rechargeable lithium battery which includes a positive electrode active material including a lithium nickel-based composite oxide having a nickel content of greater than or equal to about 80 mol% based on 100 mol% of metals excluding lithium, the method including constant-current charging the rechargeable lithium battery at a current density of 4 C to 10 C; and constant-voltage charging the rechargeable lithium battery.

The method for charging a rechargeable lithium battery may shorten a charging time and improve cycle-life characteristics of the battery by avoiding or reducing a structure degradation reaction of a positive electrode active material.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIGS. 1 to 4 are cross-sectional views schematically showing rechargeable lithium batteries according to some example embodiments.
FIG. 5 is a dQ/dV graph after formation for the rechargeable lithium battery cell of Preparation Example 1.
FIG. 6 is a dQ/dV graph after oxidation for the rechargeable lithium battery cell of Preparation Example 3.
FIG. 7 is a capacity-voltage graph for the standard charge/discharge cycle performed in Example 1 and Comparative Example 1.
FIG. 8 is a scanning electron microscope (SEM) image showing a cross-section of a discharged positive electrode active material particle after 100 repetitions of the charge/discharge cycle performed in Example 1.
FIG. 9 is an SEM image showing a cross-section of discharged positive electrode active material particles after 100 repetitions of the charge-discharge cycle performed in Comparative Example 1.
FIG. 10 is an SEM image showing a cross-section of a discharged positive electrode active material particle after 100 repetitions of the charge-discharge cycle performed in Comparative Example 2.
FIG. 11 is an SEM image showing a cross-section of a discharged positive electrode active material particle after 100 repetitions of the charge-discharge cycle performed in Comparative Example 6.
FIG. 12 is an SEM image showing a cross-section of a discharged positive electrode active material particle after 100 repetitions of the charge-discharge cycle performed in Comparative Example 7.

### DETAILED DESCRIPTION

Hereinafter, embodiments of the present disclosure will be described in more detail. However, these embodiments are presented as examples, and the present disclosure is not limited thereto, and the present disclosure is defined by the scope of the appended claims and equivalents thereof.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

In embodiments, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

In embodiments, "layer" herein includes not only a shape formed on the whole surface if (e.g., when) viewed from a plan view, but also a shape formed on a partial surface.

Unless otherwise specified in this specification, what is indicated in the singular may also include the plural. In embodiments, unless otherwise specified, "A or B" may mean "including A, including B, or including A and B."

In embodiments, the term "metal" is interpreted as a concept including ordinary metals, transition metals and/or metalloids (semi-metals).

As used herein, if (e.g., when) a definition is not otherwise provided, the particle diameter may be an average particle diameter. In embodiments, the particle diameter may refer to an average particle diameter (D50), which may mean the diameter of particles having a cumulative volume of 50 volume% in the particle size distribution. The average particle diameter (D50) may be measured by any suitable method generally available in the art, for example, by a particle size analyzer, and/or by a transmission electron microscope image, and/or a scanning electron microscope (SEM) image. In embodiments, a dynamic light-scattering measurement device may be used to perform a data analysis, and the number of particles may be counted for each particle size range. From this, the average particle diameter (D50) value may be easily obtained through a calculation. In embodiments, it can be measured using a laser diffraction method. If (e.g., when) measuring by the laser diffraction method, for example, the particles to be measured may be dispersed in a dispersion medium, and then introduced into a commercially available laser diffraction particle diameter measuring device (e.g., Microtrac MT 3000), and ultrasonic waves of about 28 kHz with an output of 60 W may be irradiated to calculate an average particle diameter (D50) on the basis of 50% of the particle diameter distribution in the measuring device.

### Method of Charging Rechargeable Lithium Battery

A method for charging a rechargeable lithium battery according to some example embodiments includes: (1) charging a rechargeable lithium battery at a constant current (CC) at a current density (C-rate) of 4C to 10C, and (2) charging a rechargeable lithium battery at a constant voltage (CV) wherein the rechargeable lithium battery includes a positive electrode active material including a lithium nickel-based composite oxide having a nickel content of greater than or equal to about 80 mol% based on 100 mol% of metals excluding lithium.

The charging method may include performing the constant-voltage charging (2) after the constant-current charging (1). For example, the constant-voltage charging (2) may be carried out immediately (or substantially immediately) following the constant-current charging (1) without (or substantially without) a break.

The nickel-based positive electrode active material has increased reversible capacity as the nickel content increases, but structural stability, thermal stability, and cycle-life characteristics may deteriorate.

Some example embodiments provides a method for charging a rechargeable lithium battery including a nickel-based positive electrode active material having a high nickel content, wherein the charging time is shortened by intentionally increasing the current density during constant-current charging of the rechargeable lithium battery, and the cycle-life characteristics can be improved by avoiding or reducing a structural degradation of the positive electrode active material while exhibiting a similar capacity compared to a general charge.

The method for charging a rechargeable lithium battery according to some example embodiments includes (1) constant-current charging the rechargeable lithium battery at a current density of 4 C to 10 C. The current density can be expressed as a C-rate, and the unit of the C-rate is C. The constant-current charging may be performed at a C-rate of any one selected from the range of 4 C to 10 C. In embodiments, 1 C may be 200 mAh/g, but may suitably vary depending on battery materials and design and is not limited thereto.

During the charging process of a rechargeable lithium battery, the positive electrode active material may undergo continuous (e.g., substantially continuous) phase transitions such as H1 (hexagonal 1) phase → M (monoclinic) phase → H2 (hexagonal 2) phase → H3 (hexagonal 3) phase. The H1 phase is a phase in which the positive electrode active material has a crystal structure having an intrinsic lattice constant in the c-axis direction, the H2 phase is a phase in which the positive electrode active material has a crystal structure having a lattice constant longer than the intrinsic lattice constant in the c-axis direction, and the H3 phase is a phase in which the positive electrode active material has a crystal structure having a lattice constant shorter than the intrinsic lattice constant in the c-axis direction.

If (e.g., when) a rechargeable lithium battery including a high nickel-based positive electrode active material is charged at a comparative current density of 1 C, the positive electrode active material may have a phase transition of H2 → H3 in a high voltage region (e.g., about 4.2 V or higher) during the charging. If (e.g., when) the phase transition of H2 → H3 occurs, the positive electrode active material may rapidly shrink in a c-axis direction and become structurally deteriorated. If (e.g., when) the structural deterioration of the positive electrode active material occurs, there is a problem of increasing resistance (e.g., electrical resistance) of the rechargeable lithium battery and decreasing a cycle-life thereof.

The method for charging a rechargeable lithium battery according to some example embodiments includes constant current-charging the rechargeable lithium battery to a charge cut-off voltage at a high current density of about 4 C to about 10 C to intentionally cause overpotential due to polarization and inactivate the H2-H3 phase transition and thereby, suppressing or reducing a lithium concentration on the positive electrode surface from lowering to cause deterioration of the positive electrode active material and resultantly, improving the cycle-life, compared to general charging methods.

For example, the current density in the constant-current charging may be about 5 C to about 10 C, for example, about 5 C to about 6 C, or about 5 C to about 7 C. In embodiments, for example, about 1 C = about 200 Ma/g.

If the current density is within the ranges herein, the H2-H3 phase transition of the positive electrode active material may be effectively inactivated, improving cycle-life characteristics of the rechargeable lithium battery.

In the constant-current charging, the rechargeable lithium battery may be charged to a charge cut-off voltage of about 4.2 V to about 5 V, for example, to a charge cut-off voltage of about 4.3 V to about 5 V, or to about 4.4 V to about 5 V.

The rechargeable lithium battery may include, in a differential capacity (Dq/Dv)-voltage (V) graph evaluated under conditions of 1 C=200 mAh/g, 5 C, 3.6 V to 4.3 V after formation, a first peak appearing at a charging voltage of between about 3.8 V and about 3.9 V; a second peak appearing at a charging voltage of between about 4.0 V and about 4.1 V; and a third peak appearing at a charging voltage of between about 4.25 V and about 4.3 V.

The formation may be said to be a first charge/discharge process after manufacturing the battery. After the formation, a standard charge/discharge cycle may be performed after the formation process and, for example, a second charge/discharge cycle. The differential capacity (Dq/Dv)-voltage (V) graph may be a Dq/Dv graph according to a charge/discharge voltage and simply expressed as a Dq/Dv graph.

In embodiments, the Dq/Dv graph may be, for example, a graph obtained by charging/discharging a rechargeable lithium battery including a positive electrode including a structure of sequentially stacking the positive electrode active material, a polyolefin separator, and a lithium metal counter electrode and an electrolyte solution including a carbonate-based solvent and a lithium salt.

The Dq/Dv graph represents capacity characteristics of operation ions depending on a voltage for the positive electrode active material. A position, an intensity difference, and an area of the main peak may suitably vary depending on types (or kinds), physical characteristics, and/or the like of the positive electrode active material.

The first peak may be an H1-M peak in which the positive electrode active material has a phase transition of H1 (hexagonal 1) → M (monoclinic) during the charging process of the rechargeable lithium battery, the second peak may be an M-H2 peak in which the positive electrode active material has a phase transition of M (monoclinic) → H2 (hexagonal 2) during the charging process of the rechargeable lithium battery, and the third peak may be a H2-H3 peak in which the positive electrode active material has a phase transition of H2 (hexagonal 2) → H3 (hexagonal 3) during the charging process of the rechargeable lithium battery.

In the method for charging a rechargeable lithium battery according to some example embodiments, because the constant-current charging proceeds at a high current density, the H2-H3 peak (third peak) may shift toward an x-axis (+) direction of the Dq/Dv graph and have less intensity, which may inactivate the H2-H3 phase transition and thus improve the cycle-life of the battery.

For example, if (e.g., when) an intensity of the first peak is I₁, an intensity of the second peak is I₂, and an intensity of the third peak is I₃, I₁ > I₂ > I₃ may be satisfied.

The method for charging a rechargeable lithium battery according to some example embodiments includes (2) constant voltage-charging (CV) the rechargeable lithium battery after the constant-current charging.

If the constant-current charging alone is included, because charge capacity is limited, the rest of the charge capacity may be supplemented by the constant voltage-charging after charging to the charge cut-off voltage through the constant-current charging.

For example, the constant voltage charging may be to charge the rechargeable lithium battery to a charge capacity of about 175 mAh/g to about 240 mAh/g, wherein the charge capacity may suitably vary depending on types (or kinds) of the positive electrode active material.

### Positive Electrode Active Material

According to some example embodiments, a positive electrode active material includes a lithium nickel-based composite oxide having a nickel content of greater than or equal to about 80 mol% based on the total metal excluding lithium.

For example, the positive electrode active material may be in the form of secondary particles in which a plurality of primary particles are agglomerated, and the average particle diameter (D₅₀) of the secondary particles may be about 10 µm to about 18 µm, for example, about 10 µm to about 16 µm, or about 12 µm to about 15 µm. The average particle diameter may be obtained by randomly measuring the size (diameter or major axis length) of about 20 particles in a scanning electron microscope image of positive electrode active materials to obtain a particle size distribution, and taking the diameter (D₅₀) of particles having a cumulative volume of 50 volume% in the particle size distribution as the average particle diameter. If (e.g., when) the average particle diameter of the positive electrode active material satisfies the above ranges, high capacity and long cycle-life can be achieved.

For example, the positive electrode active material may be a high-nickel positive electrode active material in which the nickel content is greater than or equal to about 80 mol%, greater than or equal to about 85 mol%, greater than or equal to about 88 mol%, greater than or equal to about 90 mol%, greater than or equal to about 91 mol%, or greater than or equal to about 94 mol% and less than or equal to about 99 mol%, based on 100 mol% of metal excluding lithium in the lithium nickel-based composite oxide. The high-nickel positive electrode active material may achieve high capacity and may be applied to high-capacity, high-density rechargeable lithium batteries.

For example, the positive electrode active material may include a lithium nickel-based composite oxide represented by Chemical Formula 1.

Chemical Formula 1 Liₐ₁Niₓ₁M¹_{y1}M²_{z1}O_{2-b1}X_{b1}

In Chemical Formula 1, 0.9≤a1≤1.8, 0.8≤x1≤1, 0≤y1≤0.2, 0≤z1≤0.2, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sr, Ti, V, W, and Zr, and X is one or more elements selected from F, P, and S.

In Chemical Formula 1, M¹ and M² may be different elements.

In Chemical Formula 1, for example 0.8≤x1<1, 0<y1≤0.2, and 0≤z1≤0.2; 0.9≤x1<1, 0<y1≤0.1, and 0≤z1≤0.1; 0.91≤x1<1, 0<y1≤0.09, and 0≤z1≤0.08; or 0.94≤x1<1, 0<y1≤0.06, and 0≤z1≤0.06.

For example, the positive electrode active material may include a lithium nickel-manganese-based composite oxide represented by Chemical Formula 2, a lithium nickel-cobalt-based composite oxide represented by Chemical Formula 3, or a combination thereof.

Chemical Formula 2 Liₐ₂Niₓ₂Mn_{y2}M³_{z2}O_{2-b2}X_{b2}

In Chemical Formula 2, 0.9≤a2≤1.8, 0.8≤x2<1, 0<y2≤0.2, 0≤z2≤0.2, 0.9≤x2+y2+z2≤1.1, and 0≤b2≤0.1, M³ is or more elements selected from Al, B, Ba, Ca, Ce, Cr, Fe, Mg, Co, Mo, Nb, Si, Sr, Ti, V, W, and Zr, and X is one or more elements selected from F, P, and S.

In Chemical Formula 2, 0.9≤x2<1, 0<y2≤0.1, and 0≤z2≤0.1; 0.91≤x2<1, 0<y2≤0.09, and 0≤z2≤0.08; or 0.94≤x2<1, 0<y2≤0.06, and 0<z2<0.06.

Chemical Formula 3 Liₐ₃Niₓ₃Co_{y3}M⁴_{z3}O_{2-b3}X_{b3}

In Chemical Formula 3, 0.9≤a3≤1.8, 0.8≤x3<1, 0<y3≤0.2, 0≤z3≤0.2, 0.9≤x3+y3+z3≤1.1, and 0≤b3≤0.1, M⁴ is one or more elements selected from Al, B, Ba, Ca, Ce, Cr, Fe, Mg, Mn, Mo, Nb, Si, Sr, Ti, V, W, and Zr, and X is one or more elements selected from F, P, and S.

In Chemical Formula 3, 0.9≤x3<1, 0<y3≤0.1, and 0≤z3≤0.1; 0.91≤x3<1, 0<y3≤0.09, and 0≤z3≤0.08; or 0.94≤x3<1, 0<y3≤0.06, 0≤z3≤0.06.

### Positive Electrode

In some example embodiments, a positive electrode includes a current collector, and a positive electrode active material layer on the current collector, wherein the positive electrode active material layer includes the aforementioned positive electrode active material.

The positive electrode active material layer may further include other types (or kinds) of positive electrode active materials in addition to the aforementioned positive electrode active material.

For example, the positive electrode active material layer may further include a compound capable of intercalating and deintercallating lithium (lithiated intercalation compound), and may further include at least one selected from a composite oxide of lithium and a metal selected from cobalt, manganese, nickel, and combinations thereof.

As an example, the positive electrode active material layer may further include a compound represented by any one selected from the following chemical formulas.

LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In embodiments, the positive electrode active material layer may optionally further include a binder, a conductive material (e.g., an electrically conductive material), or a combination thereof.

The binder serves to well attach the positive electrode active material particles to each other and also to well attach the positive electrode active material to the current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is used to impart conductivity (e.g., electrical conductivity) to the electrode, and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, Ketjen black, a carbon fiber, a carbon nanofiber, and carbon nanotube; a metal-based material including copper, nickel, aluminum, silver, and/or the like, in a form of a metal powder and/or a metal fiber; a conductive polymer (e.g., an electrically conductive polymer) such as a polyphenylene derivative; or a mixture thereof.

For example, the positive electrode may further include an additive that can serve as a sacrificial positive electrode.

An amount of the positive electrode active material may be about 90 wt% to about 99.5 wt% based on 100 wt% of the positive electrode active material layer, and amounts of the binder and conductive material may be about 0.5 wt% to about 5 wt%, respectively, based on 100 wt% of the positive electrode active material layer.

The current collector may include Al, but is not limited thereto.

In some example embodiments, a loading level of the positive electrode active material layer may be about 10 mg/cm² to about 40 mg/cm², for example about 10 mg/cm² to about 30 mg/cm², or about 10 mg/cm² to about 20 mg/cm².

In embodiments, the density of the positive electrode active material layer in the compressed final positive electrode may be about 3.0 g/cc to about 3.7 g/cc, for example about 3.1 g/cc to about 3.7 g.cc, about 3.3 g/cc to about 3.6 g/cc, or about 3.4 g/cc to about 3.58 g/cc. The positive electrode satisfying the loading level and positive electrode density within the above ranges is suitable for implementing a high-capacity, high-energy-density rechargeable lithium battery.

### Rechargeable Lithium Battery

The rechargeable lithium battery includes the aforementioned positive electrode, negative electrode, and electrolyte, and as an example, the rechargeable lithium battery may include a positive electrode, a negative electrode, a separator between the positive electrode and the negative electrode, and an electrolyte solution.

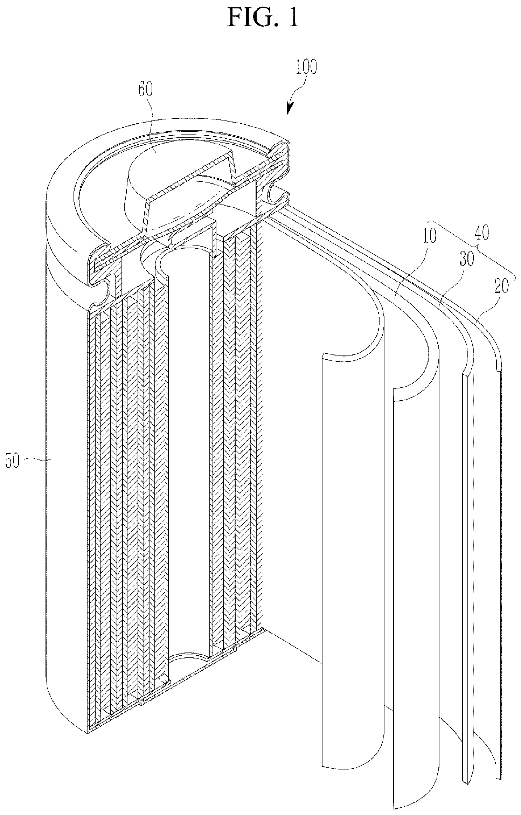

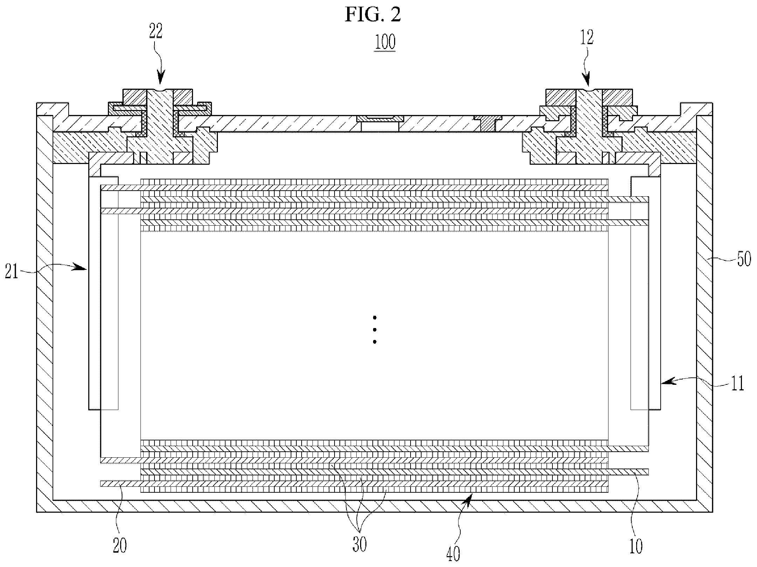

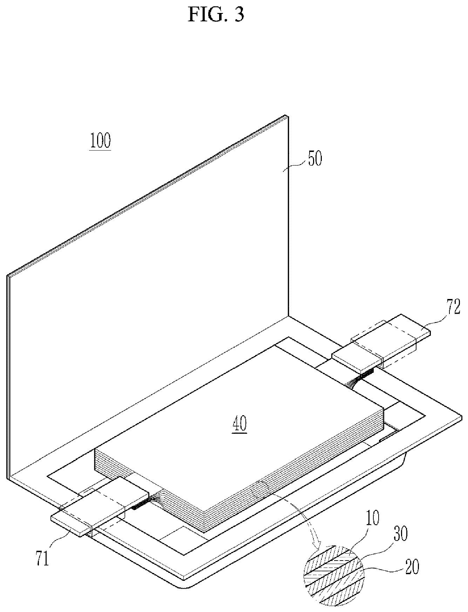

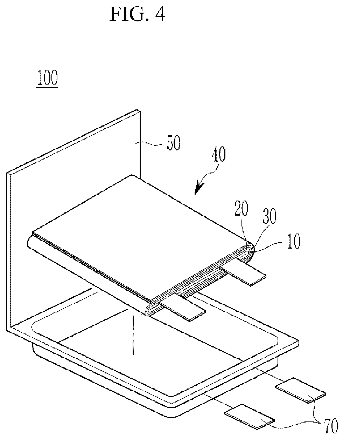

The rechargeable lithium battery may be classified into cylindrical, prismatic, pouch, coin, and/or the like depending on its shape. FIGS. 1 to 4 are schematic views illustrating rechargeable lithium batteries according to some example embodiments. FIG. 1 shows a cylindrical battery, FIG. 2 shows a prismatic battery, and FIGS. 3 and 4 show pouch-type batteries.

Referring to FIGS. 1 to 4, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution.

The rechargeable lithium battery 100 may include a sealing member 60 that seals the case 50 as shown in FIG. 1. In embodiments, in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 (FIG. 4), for example, a positive electrode tab 71 and a negative electrode tab 72 (FIG. 3) that serve as an electrical path to induce the current formed in the electrode assembly 40 to the outside.

The rechargeable lithium battery may be applied to automobiles, mobile phones, and/or various suitable types (or kinds) of electrical devices, and the present disclosure is not limited thereto.

### Negative Electrode

The negative electrode may include a current collector and a negative electrode active material layer on the current collector, and the negative electrode active material layer includes a negative electrode active material and may further include a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, for example crystalline carbon, amorphous carbon or a combination thereof. The crystalline carbon may be graphite such as non-shaped, sheet-shaped, flake-shaped, sphere-shaped, and/or fiber-shaped natural graphite and/or artificial graphite, and the amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOx (0 < x ≤ 2), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may include Sn, SnO₂, a Sn alloy, or a combination thereof.

The silicon-carbon composite may be a composite of silicon and amorphous carbon. An average particle diameter (D₅₀) of the silicon-carbon composite particles can be, for example, about 0.5 µm to about 20 µm. According to some example embodiments, the silicon-carbon composite may be in a form of silicon particles and amorphous carbon coated on the surface of the silicon particles. For example, it may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core. The crystalline carbon may be artificial graphite, natural graphite, or a combination thereof. The amorphous carbon may be a soft carbon, a hard carbon, a mesophase pitch carbonization product, calcined coke, and/or the like.

If (e.g., when) the silicon-carbon composite includes silicon and amorphous carbon, an amount of the silicon may be about 10 wt% to about 50 wt%, and an amount of the amorphous carbon may be about 50 wt% to about 90 wt% based on 100 wt% of the silicon-carbon composite. In embodiments, if (e.g., when) the composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt% based on 100 wt% of the silicon-carbon composite.

In embodiments, a thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be present as silicon alone (e.g., elemental silicon), in the form of a silicon alloy, and/or in an oxidized form. The oxidized form of the silicon may be represented as SiOₓ (0<x≤2). In embodiments, the atomic content ratio of Si:O, which indicates the degree of oxidation, may be about 99:1 to about 33:67. In the present specification, as used herein, if (e.g., when) a definition is not otherwise provided, an average particle diameter (D₅₀) indicates a particle where an accumulated volume is about 50 volume% in a particle distribution.

The Si-based negative electrode active material and/or the Sn-based negative electrode active material may be used in combination with a carbon-based negative electrode active material. If (e.g., when) using a mixture of a Si-based negative electrode active material and/or a Sn-based negative electrode active material and a carbon-based negative electrode active material, the mixing ratio may be about 1:99 to about 90:10 by weight.

The binder serves to well attach the negative electrode active material particles to each other and also to well attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If (e.g., when) an aqueous binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material capable of being fibrous (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity (e.g., electrical conductivity) and any suitable electrically conductive material may be used as a conductive material (e.g., an electrically conductive material) unless it causes a chemical change (e.g., an undesirable chemical change in the rechargeable lithium battery). Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminum silver, and/or the like; a conductive polymer (e.g., an electrically conductive polymer) such as a polyphenylene derivative; or a mixture thereof.

An amount of the negative electrode active material may be about 95 wt% to about 99.5 wt% based on 100 wt% of the negative electrode active material layer and an amount of the binder may be about 0.5 wt% to about 5 wt% based on 100 wt% of the negative electrode active material layer. For example, the negative electrode active material layer may include about 90 wt% to about 99 wt% of the negative electrode active material, 0.5 wt% to about 5 wt% of the binder, and 0.5 wt% to about 5 wt% of the conductive material.

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and/or an alloy thereof, and may be in the form of a foil, sheet, and/or foam. A thickness of the negative electrode current collector may be, for example, about 1 µm to about 20 µm, about 5 µm to about 15 µm, or about 7 µm to about 10 µm.

### Electrolyte

For example, the electrolyte for a rechargeable lithium battery may be an electrolyte solution, which may include a non-aqueous organic solvent and a lithium salt.

The non-aqueous organic solvent serves as a medium to transmit ions taking part in the electrochemical reaction of a battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond, and/or the like); amides such as dimethylformamide; dioxolanes such as 1,3-dioxolane, 1,4-dioxolane, and/or the like; sulfolanes, and/or the like.

The non-aqueous organic solvent may be used alone or in a mixture of two or more types (or kinds), and if (e.g., when) two or more types (or kinds) are used in a mixture, a mixing ratio can be suitably or appropriately adjusted according to suitable or desired battery performance, which should be readily apparent to those of ordinary skill in the art upon reviewing this disclosure.

In embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethyl carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and/or the like.

The lithium salt dissolved in the organic solvent supplies lithium ions in a battery, enables a basic operation of a rechargeable lithium battery, and improves transportation of the lithium ions between positive and negative electrodes. For example, the lithium salt may include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂), x and y are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

A concentration of lithium salt may be within a range of about 0.1 M to about 2.0 M. If the concentration of lithium salt is within the above range, the electrolyte solution has suitable or appropriate ionic conductivity and viscosity, and thus excellent performance can be achieved and lithium ions can move effectively.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one selected from polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{®}), or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one selected from a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure are described below. However, the following examples are only examples of the present disclosure, and the present disclosure is not limited to the following examples.

### Preparation Example: Manufacturing of Rechargeable Lithium Battery Cell Preparation Example 1

98.5 wt% of LiNi_{0.9}Mn_{0.1}O₂ (D₅₀ = 12µm) as a positive electrode active material, 1.0 wt% of a polyvinylidene fluoride binder, and 0.5 wt% of a carbon nanotube conductive material were mixed to prepare a positive electrode active material layer slurry, which was coated on an aluminum foil current collector and then, dried and compressed to manufacture a positive electrode. Herein, the positive electrode active material layer had a loading level of 20 mg/cm², and the final compressed positive electrode had a density of about 3.4 g/cc.

A negative electrode active material layer slurry was prepared by mixing 97.5 wt% of a graphite negative electrode active material, 1.5 wt% of carboxymethyl cellulose, and 1 wt% of styrene butadiene rubber in a water solvent. The negative electrode active material layer slurry was coated on a copper foil current collector and then, dried and compressed to manufacture a negative electrode.

A polytetrafluoroethylene separator was provided between the positive electrode and the negative electrode and then, inserted into a case, and an electrolyte solution prepared by mixing ethylene carbonate and dimethyl carbonate in a volume ratio of 3:7 and dissolving 1 M LiPF₆ therein was inserted thereinto, thereby manufacturing a rechargeable lithium battery cell.

### Preparation Example 2

A rechargeable lithium battery cell Preparation Example 2 was manufactured in substantially the same manner as in Preparation Example 1 except that LiNi_{0.88}Co_{0.10}Al_{0.02}O₂ (D₅₀= 12µm) was used as the positive electrode active material.

### Preparation Example 3

A rechargeable lithium battery cell of Preparation Example 3 was manufactured in substantially the same manner as in Preparation Example 1 except that LiNi_{0.66}Mn_{0.34}O₂ (D₅₀= 12µm) was used as the positive electrode active material.

### Preparation Example 4

A rechargeable lithium battery cell Preparation Example 4 was manufactured in substantially the same manner as in Preparation Example 1 except that LiCoO₂ (D₅₀= 15µm) was used as the positive electrode active material.

### Evaluation Example 1: Dq/Dv Evaluation

The rechargeable lithium battery cell according to Preparation Example 1 was charged to an upper limit voltage of 4.3 V at a constant current of 0.2 C and to 0.05 C at the constant voltage and then, discharged to a cut-off voltage of 3.0 V at 0.2 C to proceed with a formation process (1^{st} charge/discharge).

Subsequently, the cell was constant-current charged to a charge cut-off voltage of 4.3 V at each current density of 0.2 C, 0.5 C, 1C, 2 C, and 5 C and constant voltage-charged, until capacity reached 200 mAh/g, and then, discharged to a cut-off voltage of 3.6 V at 0.33 C to proceed with standard charge/discharge (2^{nd} charge/discharge). The cell was evaluated with respect to Dq/Dv under conditions of 1 C = 200 mAh/g and 3.6 V to 4.3 V.

In addition, the rechargeable lithium battery cell of Preparation Example 3 was charged to an upper limit voltage of 4.3 V at a constant current of 0.2 C and to 0.05 C at the constant voltage and then, discharged to a cut-off voltage of 3.0 V at 0.2 C to proceed with a formation process (1^{st} charge/discharge).

Subsequently, the cell was constant current-charged to a charge cut-off voltage of 4.3 V at each current density of 0.2 C, 0.5 C, 1 C, 2 C, and 5 C and at the constant voltage, until capacity reached 180 mAh/g, and then, discharged to a cut-off voltage of 3.6 V at 0.33 C to proceed with standard charge/discharge (2^{nd} charge/discharge).

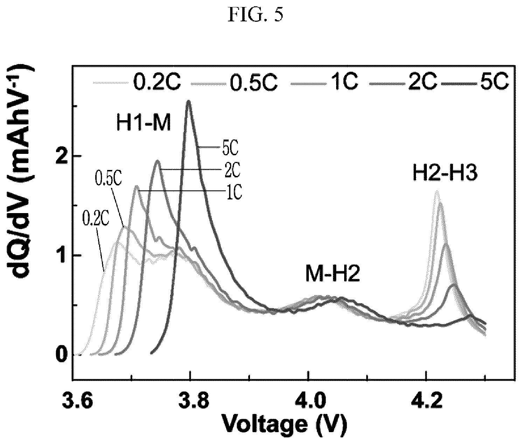

FIG. 5 shows a Dq/Dv graph according to a voltage after the formation of the rechargeable lithium battery cell of Preparation Example 1. FIG. 5 shows five graphs at different current densities after the formation, each of which shows an H1-M peak, an M-H2 peak, and an H2-H3 peak.

Referring to FIG. 5, in the case of a rechargeable lithium battery cell including a high-Ni positive electrode active material, as the current density increased from 0.2 C to 5 C, the H1-M peak, M-H2 peak, and H2-H3 peak were shifted toward an x-axis (+) direction of the graphs. In addition, the smaller intensity of the H2-H3 peak, the higher current density, which confirmed that H2-H3 phase transition of the positive electrode active material may be inactivated, if (e.g., when) charged at high current density.

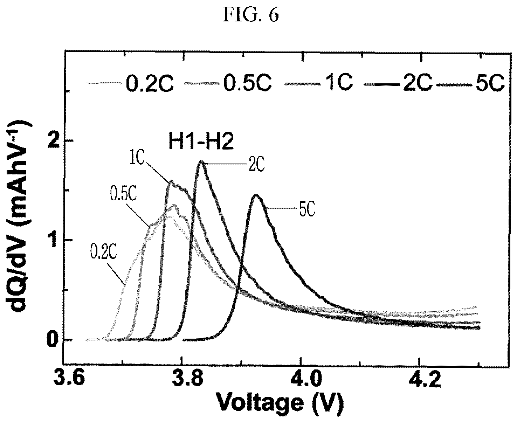

In addition, FIG. 6 shows a Dq/Dv graph according to a voltage after the formation of the rechargeable lithium battery cell of Preparation Example 3. FIG. 5 shows five graphs at different current densities after the formation, each of which shows an H1-H2 peak.

Referring to FIG. 6, in the rechargeable lithium battery including a mid-Ni positive electrode active material, even if a charge voltage was increased to 4.3 V unlike in FIG. 5, there was no H2-H3 phase transition.

### Example: Method of Charging Rechargeable Lithium Battery Cell

### Example 1

The rechargeable lithium battery cell of Preparation Example 1 was charged to an upper limit voltage of 4.3 V at a constant current of 0.2 C and to 0.05 C at the constant voltage and then, discharged to a cut-off voltage of 3.0 V at 0.2 C to proceed with a formation process (1^{st} charge/discharge).

Subsequently, the cell was constant current-charged to a charge cut-off voltage of 4.3 V at current density of 5 C and at the constant voltage, until capacity reached 200 mAh/g, and then, discharged to a cut-off voltage of 3.6 V at 0.33 C to proceed with standard charge/discharge (2^{nd} charge/discharge). Discharge capacity during the standard charge/discharge was shown as initial discharge capacity in Table 1.

Subsequently, the cell was 100 times repeatedly charged and discharged under the same conditions as the standard charge/discharge to calculate a ratio of 100 cycle discharge capacity to the initial discharge capacity, which is shown as a 100 cycle-life retention rate in Table 1.

### Comparative Example 1

First, the rechargeable lithium battery cell of Preparation Example 1 was charged and discharged for a formation process under the same conditions as the formation process (1^{st} charge/discharge) in Example 1. Subsequently, the rechargeable lithium battery cell was constant current-charged to a charge cut-off voltage of 4.3 V at current density of 1 C and then, discharged to a cut-off voltage of 3.6 V at 0.33 C to perform standard charge/discharge (2^{nd} charge/discharge).

### Comparative Example 2

First, a rechargeable lithium battery cell of Preparation Example 1 was charged and discharged as a formation process under the same conditions as the formation process (1^{st} charge/discharge) in Example 1. Subsequently, the rechargeable lithium battery cell was constant current-charged to a charge cut-off voltage of 4.3 V at current density of 5 C and then, discharged to a cut-off voltage of 3.6 V at 0.33 C to perform standard charge/discharge (2^{nd} charge/discharge).

### Comparative Example 3

First, the rechargeable lithium battery cell of Preparation Example 1 was charged and discharged as a formation process under the same conditions as the formation process (1^{st} charge/discharge) of Example 1. Subsequently, the rechargeable lithium battery cell was constant current-charged to a charge cut-off voltage of 4.3 V by sequentially lowering current density to 5 C, 3 C, and 2 C and then, discharged to a cut-off voltage of 3.6 V at 0.33 C to perform standard charge/discharge (2^{nd} charge/discharge).

### Example 2

First, the rechargeable lithium battery cell of Preparation Example 2 was charged and discharged as a formation process under the same conditions as the formation process (1^{st} charge/discharge) of Example 1. Subsequently, the rechargeable lithium battery cell was constant current-charged to a charge cut-off voltage of 4.3 V at current density of 5 C and constant voltage-charged, until capacity reached 200 mAh/g, and then, discharged to a cut-off voltage of 3.6 V at 0.33 C to perform standard charge/discharge (2^{nd} charge/discharge).

### Comparative Example 2-1

First, the rechargeable lithium battery cell of Preparation Example 2 was charged and discharged as a formation process under the same conditions as the formation process (1^{st} charge/discharge) of Example 1. Subsequently, the rechargeable lithium battery cell was constant current-charged to a charge cut-off voltage of 4.3 V at current density of 1 C and then, discharged to a cut-off voltage of 3.6 V at 0.33 C to perform standard charge/discharge (2^{nd} charge/discharge).

### Comparative Example 4

First, the rechargeable lithium battery cell of Preparation Example 4 was charged and discharged as a formation process under the same conditions as the formation process (1^{st} charge/discharge) of Example 1. Subsequently, the rechargeable lithium battery cell was constant current-charged to a charge cut-off voltage of 4.3 V at current density of 5 C and constant voltage-charged, until capacity reached 174 mAh/g, and then, discharged to a cut-off voltage of 3.6 V at 0.33 C to perform standard charge/discharge (2^{nd} charge/discharge).

### Comparative Example 4-1

First, the rechargeable lithium battery cell of Preparation Example 4 was charged and discharged as a formation process under the same conditions as the formation process (1^{st} charge/discharge) of Example 1. Subsequently, the rechargeable lithium battery cell was constant current-charged to a charge cut-off voltage of 4.3 V at current density of 1 C and then, discharged to a cut-off voltage of 3.6 V at 0.33 C to perform standard charge/discharge (2^{nd} charge/discharge).

### Comparative Example 5

First, the rechargeable lithium battery cell of Preparation Example 3 was charged and discharged as a formation process under the same conditions as the formation process (1^{st} charge/discharge) of Example 1. Subsequently, the rechargeable lithium battery cell was constant current-charged to a charge cut-off voltage of 4.3 V at current density of 5 C and constant voltage-charged, until capacity reached 180 mAh/g, and then, discharged to a cut-off voltage of 3.6 V at 0.33 C to perform standard charge/discharge (2^{nd} charge/discharge).

### Comparative Example 6

First, the rechargeable lithium battery cell of Preparation Example 3 was charged and discharged as a formation process under the same conditions as the formation process (1^{st} charge/discharge) of Example 1. Subsequently, the rechargeable lithium battery cell was constant current-charged to a charge cut-off voltage of 4.3 V at current density of 1 C and then, discharged to a cut-off voltage of 3.6 V at 0.33 C to perform standard charge/discharge (2^{nd} charge/discharge).

### Comparative Example 7

First, the rechargeable lithium battery cell of Preparation Example 3 was charged and discharged as a formation process under the same conditions as the formation process (1^{st} charge/discharge) of Example 1. Subsequently, the rechargeable lithium battery cell was constant current-charged to a charge cut-off voltage of 4.3 V at current density of 5 C and then, discharged to a cut-off voltage of 3.6 V at 0.33 C to perform standard charge/discharge (2^{nd} charge/discharge).

### Evaluation Example 2: SEM Image Analysis

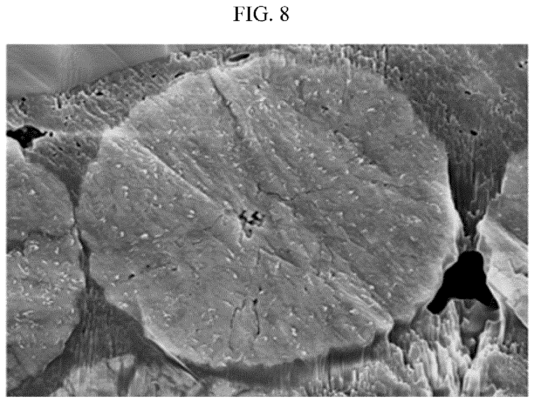

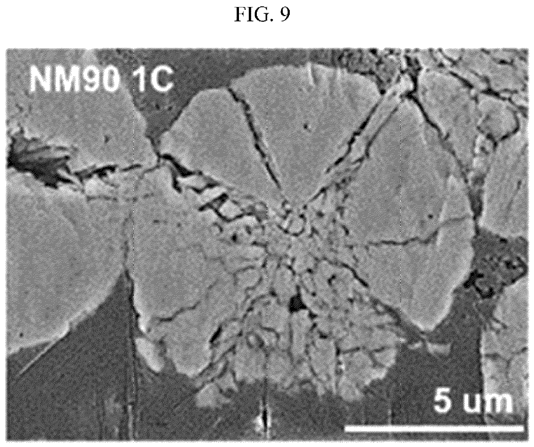

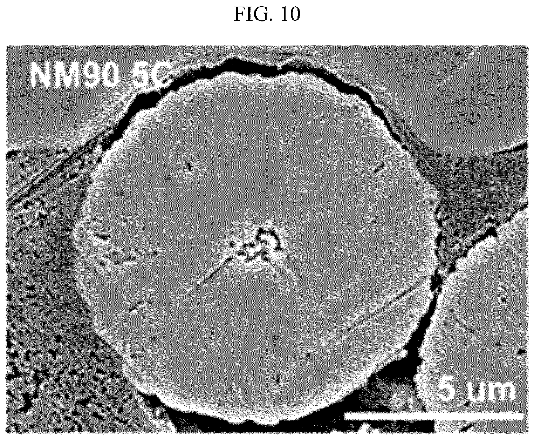

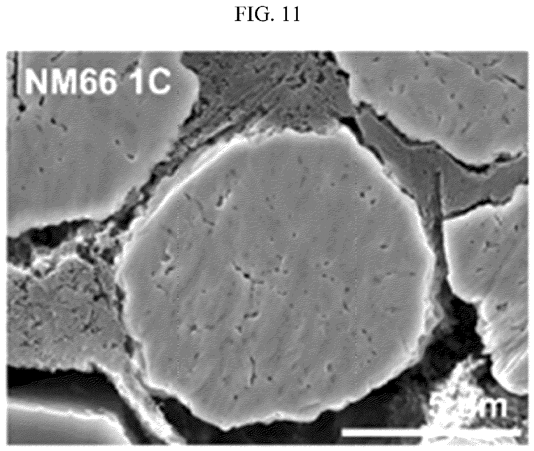

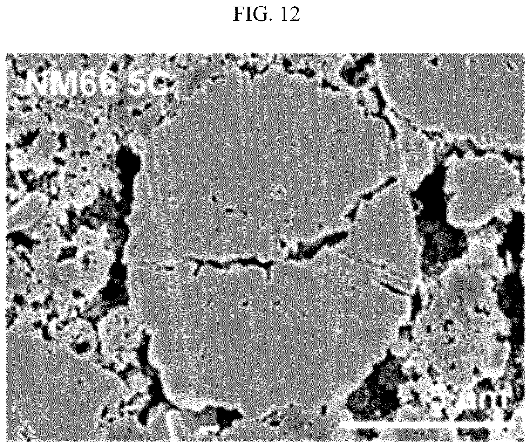

After repetitively performing 100 cycles under the same conditions of the standard charge/discharge independently in Example 1 and Comparative Examples 1, 2, 6, and 7, images of each cross-section of the discharged positive electrode active material particles were taken with a scanning electron microscope (SEM) and then, shown in FIGS. 8 to 12.

Referring to FIGS. 8 to 12, in Comparative Example 1 performing constant current-charging at lower current density of 1 C than Example 1, because the high-nickel-based positive electrode active material had a H2-H3 phase transition during the charge process, the particles were severely cracked.

### Evaluation Example 3: Analysis of Battery Cell Characteristics

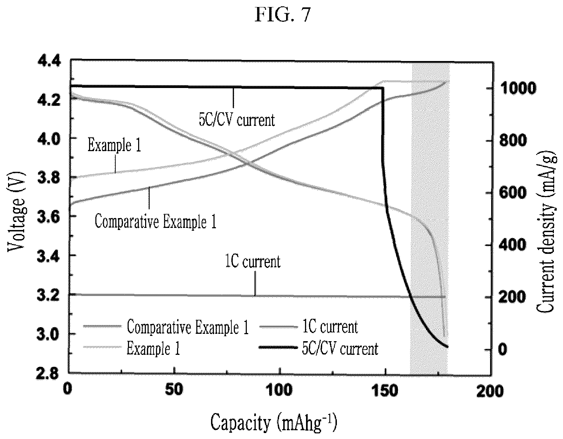

The cells of Examples 1 to 2 and Comparative Examples 1 to 7 were measured with respect to initial discharge capacity and charging time, if (e.g., when) each standard charge/discharge (2^{nd} charge/discharge) was independently performed, the results of which are shown in Table 1. In addition, the standard charge/discharge cycles of Example 1 and Comparative Example 1 were shown as a capacity-voltage graph in FIG. 7.

In addition, after repeating 100 cycles, each standard charge/discharge independently performed in Examples 1 to 2 and Comparative Examples 1 to 7, a ratio of 100 cycle discharge capacity to the initial discharge capacity was calculated and then, shown as a 100 cycle-life retention rate in Table 1.

**Table 1**

| | Positive electrode active material composition | Charging method | Initial discharge capacity (mAh/g) | Chargin g time (min) | 100^{th} cycle cycle-life retention rate (%) |
|---|---|---|---|---|---|
| Example 1 | LiNi_{0.9}Mn_{0.1}O₂ | 5 C/CV | 179.2 | 35 | 89.1 |
| Comparative Example 1 | | 1 C | 177.6 | 53 | 86.3 |
| Comparative Example 2 | | 5 C | 156.5 | 9 | 85.5 |
| Comparative Example 3 | | 5C/3C/2C | 176.9 | 14 | 85.5 |
| Example 2 | LiNi_{0.88}CO_{0.10} Al_{0.02}O₂ | 5 C/CV | 203.6 | 16 | 89.5 |
| Comparative Example 2-1 | | 1 C | 202.2 | 60 | 73.5 |
| Comparative Example 4 | LiCoO₂ | 5 C/CV | 174.0 | 17 | 97.7 |
| Comparative Example 4-1 | | 1 C | 168.5 | 50 | 98.2 |
| Comparative Example 5 | LiNi_{0.66}Mn_{0.34} O₂ | 5 C/CV | 146.2 | 32 | 82.5 |
| Comparative Example 6 | | 1 C | 129.3 | 38 | 93.3 |
| Comparative Example 7 | | 5 C | 90.2 | 5 | 63.6 |

Referring to Table 1, Example 1 exhibited a short charging time, which was half of that of Comparative Example 1, but a higher cycle-life retention rate than Comparative Examples 1 to 3.

Example 2 exhibited a larger initial discharge capacity but shorter charging time and a higher cycle-life retention rate than Comparative Example 2-1.

In addition, Comparative Examples 4 and 4-1 exhibited a lower cycle-life retention rate even if (e.g., when) the 5 C/CV charging method was used than if (e.g., when) the 1 C charging method was used.

In addition, the charging methods of Comparative Example 5 to Comparative Example 7 for rechargeable lithium batteries including a mid-nickel-based positive electrode active material were confirmed to exhibit that a cycle-life retention rate was more deteriorated even if (e.g., when) the 5C/CV charging method was used than if (e.g., when) the 1 C charging method was used.

While the subject matter of this disclosure has been described in connection with what is presently considered to be practical example embodiments, it is to be understood that the present disclosure is not limited to the disclosed embodiments. On the contrary, it is intended to cover various suitable modifications and equivalent arrangements included within the spirit and scope of the appended claims, and equivalents thereof.

### Description of Symbols

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A method for charging a rechargeable lithium battery, the method comprising:
constant-current charging the rechargeable lithium battery at a current density of 4C to 10C; and constant-voltage charging the rechargeable lithium battery,
wherein the rechargeable lithium battery comprises a positive electrode active material comprising a lithium nickel-based composite oxide having a nickel content of greater than or equal to 80 mol% based on 100 mol% of metals excluding lithium.

2. The method as claimed in claim 1, wherein:
a current density in the constant-current charging is 5 C to 10 C.

3. The method as claimed in claim 1 or 2, wherein
in the constant-current charging, the rechargeable lithium battery is charged to a charge cut-off voltage of 4.2 V to 5 V.

4. The method as claimed in any of claims 1-3, wherein:
in a differential capacity (Dq/Dv)-voltage (V) graph evaluated under conditions of 1C=200mAh/g, 5C, 3.6V to 4.3V after formation,
the rechargeable lithium battery exhibits a first peak that appears at a charging voltage of between 3.8 V and 3.9 V; a second peak that appears at a charging voltage of between 4.0 V and 4.1 V; and a third peak that appears at a charging voltage of between 4.25 V and 4.3 V.

5. The method as claimed in claim 4, wherein:
the third peak is a peak where the positive electrode active material undergoes a phase transition from H2 (hexagonal 2) to H3 (hexagonal 3) during the charging process.

6. The method as claimed in claim 4 or 5, wherein:
if an intensity of the first peak is I₁, an intensity of the second peak is I₂, and an intensity of the third peak is I₃, I₁ > I₂ > I₃ is satisfied.

7. The method as claimed in any of claims 1-6, wherein:
in the constant-voltage charging, the rechargeable lithium battery is charged to a charging capacity of 175 mAh/g to 240 mAh/g.

8. The method as claimed in any of claims 1-7, wherein:
the positive electrode active material is in a form of secondary particles formed by agglomeration of a plurality of primary particles.

9. The method as claimed in any of claims 1-8, wherein:
an average particle diameter (D₅₀) of the positive electrode active material is 10 µm to 18 µm.

10. The method as claimed in any of claims 1-9, wherein:
the positive electrode active material comprises a high-nickel positive electrode active material in which the nickel content is greater than or equal to 90 mol% based on 100 mol% of metal excluding lithium.

11. The method as claimed in any of claims 1-10, wherein:
the positive electrode active material comprises a lithium nickel-based composite oxide represented by Chemical Formula 1:
Chemical Formula 1 Liₐ₁Niₓ₁M¹_{y1}M²_{z1}O_{2-b1}X_{b1}
wherein, in Chemical Formula 1, 0.9≤a1≤1.8, 0.8≤x1≤1, 0≤y1≤0.2, 0≤z1≤0.2, 0.9≤x1+y1+z1≤1.1, and 0≤b1≤0.1, M¹ and M² are each independently one or more elements selected from Al, B, Ba, Ca, Ce, Co, Cr, Cu, Fe, Mg, Mn, Mo, Nb, Si, Sr, Ti, V, W, and Zr, and X is one or more elements selected from F, P, and S.

12. The method as claimed in any of claims 1-11, wherein:
the positive electrode active material comprises a lithium nickel-manganese-based composite oxide represented by Chemical Formula 2:
Chemical Formula 2 Liₐ₂Niₓ₂Mn_{y2}M³_{z2}O_{2-b2}X_{b2}
wherein, in Chemical Formula 2, 0.9≤a2≤1.8, 0.8≤x2<1, 0<y2≤0.2, 0≤z2≤0.2, 0.9≤x2+y2+z2≤1.1, and 0≤b2≤0.1, M³ is or more elements selected from Al, B, Ba, Ca, Ce, Cr, Fe, Mg, Co, Mo, Nb, Si, Sr, Ti, V, W, and Zr, and X is one or more elements selected from F, P, and S.

13. The method as claimed in any of claims 1-12, wherein:
the positive electrode active material comprises a lithium nickel-cobalt-based composite oxide represented by Chemical Formula 3:
Chemical Formula 3 Liₐ₃Niₓ₃CO_{y3}M⁴_{z3}O_{2-b3}X_{b3}
wherein, in Chemical Formula 3, 0.9≤a3≤1.8, 0.8≤x3<1, 0<y3≤0.2, 0≤z3≤0.2, 0.9≤x3+y3+z3≤1.1, and 0≤b3≤0.1, M⁴ is one or more elements selected from Al, B, Ba, Ca, Ce, Cr, Fe, Mg, Mn, Mo, Nb, Si, Sr, Ti, V, W, and Zr, and X is one or more elements selected from F, P, and S.

14. The method as claimed in any of claims 1-13, wherein:
the rechargeable lithium battery comprises a positive electrode active material layer comprising the positive electrode active material, and
a loading level of the positive electrode active material layer is 10 mg/cm² to 40 mg/cm².

15. The method as claimed in claim 14, wherein:
a density of the positive electrode active material layer is 3.0 g/cc to 3.7 g/cc.
